# EUROPÄISCHE PATENTSCHRIFT

(11) **EP 2 707 695 B1**
(45) Veröffentlichungstag und Bekanntmachung des Hinweises auf die Patenterteilung: **02.09.2020**
(21) Anmeldenummer: 12727586.5
(22) Anmeldetag: 05.05.2012
(51) Int. Cl.: G01N 21/03, G01N 21/05, G01N 21/85

(54) **TRANSFLEXIONSSONDE UND TRANSFLEXIONSSENSOR**
TRANSFLEXION PROBE AND TRANSFLEXION SENSOR
SONDE EN TRANSFLEXION ET CAPTEUR DE TRANSFLEXION

(30) Priorität: 10.05.2011 DE 102011101108
(43) Veröffentlichungstag der Anmeldung: 19.03.2014
(73) Patentinhaber: Sartorius Stedim Biotech GmbH, 37079 Göttingen (DE)
(72) Erfinder: RIECHERS, Daniel, 93051 Regensburg (DE); GRIMM, Christian, 37308 Heilbad Heiligenstadt (DE)
(74) Vertreter: Vigand, Philippe
(86) Internationale Anmeldenummer: PCT/EP2012/001941
(87) Internationale Veröffentlichungsnummer: WO 2012/152422

(56) Entgegenhaltungen:
- EP-A2- 0 494 524
- DE-A1- 19 843 553
- US-A- 5 303 036
- US-A1- 2003 023 152
- US-A1- 2007 296 966

## Beschreibung

### Gebiet der Erfindung

Die Erfindung bezieht sich auf eine Transflexionssonde zur Durchführung einer Transflexionsmessung an einem in einem Behälter befindlichen Fluid,
umfassend einen mit einer Lichtleitstrecke in seinem Inneren ausgestatteten Sondenschaft, an dessen vorderem Ende eine offene Durchflusskammer mit einer der vorderen Stirnseite des Sondenschaftes gegenüberliegenden Reflexionsscheibe angeordnet ist.

Die Erfindung bezieht sich weiter auf einen Transflexionssensor, umfassend eine Transflexionssonde der vorgenannten Art und ein mit dieser gekoppeltes Sensormodul.

### Stand der Technik

Derartige Transflexionssonden und Transflexionssensoren sind bekannt aus Tosi, S. et. al.: "Assessment of In-Line Near-Infrared Spectroscopy for Continuous Monitoring of Fermentation Processes", Biotechnol. Prog. 2003, 19, 1816-1821*.*

Diese Druckschrift beschreibt einen Sensor auf Basis spektroskopischer Messungen im nahen Infrarotbereich zur Überwachung einer Kulturflüssigkeit in einem Bioreaktor. Der Sensor ist zusammengesetzt aus einer Spektrometereinheit sowie einer Sonde, die in die Wandung des Bioreaktors in diese durchdringender Weise eingesetzt ist und mit ihrem vorderen Ende in unmittelbarem Kontakt zu der zu überwachenden Kulturbrühe steht und an ihrem rückwärtigen Ende mit der Spektrometereinheit gekoppelt ist. Die Sonde umfasst ein geordnetes Lichtleiterbündel, welches zwei Gruppen von Lichtleitern umfasst, nämlich einen Satz ringförmig angeordneter, äußerer Beleuchtungsfasern und einen Satz zentraler, im Inneren des Rings von Beleuchtungsfasern angeordneter Detektionsfasern. Gegenüber dem vorderen stirnseitigen Ende dieses Faserbündels ist in einstellbarem Abstand eine verspiegelte Reflexionsscheibe angeordnet. Die mechanische Verbindung zwischen der Stirnseite des Faserbündels und der Reflexionsscheibe weist seitliche Öffnungen auf, sodass die Kulturbrühe, in welche die Sonde mit ihrem vorderen Ende eintaucht, den Zwischenraum zwischen der Reflexionsscheibe und der Stirnseite des Faserbündels durchströmen kann. Diese Durchströmung wird durch einen separaten Rührmechanismus zur Umwälzung der Kulturbrühe befördert. An ihrem rückwärtigen Ende ist die Sonde über eine flexible faseroptische Verbindung mit einer NIR-Spektrometereinheit verbunden. Die Spektrometereinheit umfasst eine Lichtquelle, deren Licht in den Eingang der Beleuchtungsfasern eingespeist wird. Weiter umfasst die Spektrometereinheit ein für den nahen Infrarotbereich ausgelegtes Spektrometer, dessen Eingangsanordnung optisch mit dem Ausgang der Detektionsfasern gekoppelt ist. Zur Durchführung einer Messung wird Licht der Lichtquelle in die Beleuchtungsfasern eingespeist. Dieses tritt am vorderen Ende des Lichtleiterbündels aus und durchstrahlt die Durchflusskammer. Auf dem Weg durch die Kulturbrühe in der Durchflusskammer erfährt das Beleuchtungslicht eine Streuung und/oder Absorption gemäß den optischen Eigenschaften der Kulturbrühe. Auf der gegenüberliegenden Seite der Durchflusskammer wird es von der Reflexionsscheibe reflektiert und durchläuft erneut die Durchflusskammer, um als Detektionslicht wieder auf der Stirnseite des Faserbündels aufzutreffen. Derjenige Anteil des Detektionslichtes, der innerhalb des Akzeptanzwinkels der Detektionsfasern auftrifft, wird durch diese zurück zur Spektrometereinheit geleitet und über die Eingangsanordnung des Spektrometers in dieses eingekoppelt,.sodass eine spektrometrische Analyse in bekannter Weise durchgeführt werden kann.

Nachteilig bei dem bekannten Instrument ist die geringe Messempfindlichkeit aufgrund hoher optischer Verluste. Insbesondere kann jegliches Detektionslicht, das außerhalb des kleinen Akzeptanzwinkels der Detektionsfasern auf die Stirnseite des Faserbündels auftrifft, nicht zur Messung verwendet werden. Auch ist insbesondere der nahe Infrarotbereich ein Spektralbereich elektromagnetischer Wellen, der schwer mittels optischer Fasern übertragbar ist. Hier treten hohe Verluste am Fasermaterial und insbesondere in Biegungen der Fasern auf. Um gleichwohl zu einer sensitiven Messung zu gelangen, muss die Lichtquelle entsprechend stärker ausgebildet sein, um die Verluste zu kompensieren. Dies führt jedoch zu einem erhöhten Energieverbrauch sowie Wärmeproblemen in der Spektrometereinheit. Eine ähnliche Transflexionssonde ist aus US5303036 bekannt.

In der EP 0 494 524 A2 wird ein Überwachungsgerät offenbart, welches mit Hilfe der klassischen Lichtleiter-Technologie die Konzentrationsbestimmung von Komponenten in einem Fluid möglich macht. Hierzu werden z.B. optische Fasern in Glaskörpern oder aber an der innenseitig polierte Metallkörper zur Lichtführung durch Mehrfachreflexion verwendet.

### Aufgabenstellung

Es ist die Aufgabe der vorliegenden Erfindung, eine Transflexionssonde und einen Transflexionssensor der bekannten Art derart weiterzubilden, dass auch bei geringer Lichtleistung eine hohe Sensitivität erreicht werden kann.

### Darlegung der Erfindung

Diese Aufgabe wird in Verbindung mit den Merkmalen des Oberbegriffs von Anspruch 1 dadurch gelöst, dass der Sondenschaft als ein an seiner vorderen Stirnseite von einem transparenten Fenster abgeschlossener, starrer Hohlkörper ausgebildet ist, der an seinem rückwärtigen Ende eine erste Koppeleinrichtung zur starren Ankopplung eines Sensormoduls an den Sondenschaft aufweist.

Weiter wird die genannte Aufgabe gelöst durch einen Transflexionssensor mit den Merkmalen von Anspruch 6, d.h. durch einen Transflexionssensor, umfassend eine erfindungsgemäße Transflexionssonde sowie ein starr an das rückwärtige Ende des Sensorschaftes angekoppeltes Sensormodul, welches umfasst:
- eine Lichtquelle,
- eine Eingangsanordnung eines optischen Detektors,
- eine Beleuchtungslicht-Freistrahlleiteinrichtung, die eingerichtet ist, Licht der Lichtquelle entlang der Längserstreckung des Sensorschaftes zu dem transparenten Fenster zu lenken, und
- eine Detektionslicht-Freistrahlleiteinrichtung, die eingerichtet ist, von der Reflexionsscheibe durch das transparente Fenster reflektiertes Licht der Eingangsanordnung des optischen Detektors zuzuleiten.

Bevorzugte Ausführungsformen und Weiterbildungen der Erfindung sind Gegenstand der abhängigen Ansprüche.

Kern der Erfindung ist die Abkehr von der bekannten faseroptischen Kopplung von Transflexions-Durchflusszelle und eigentlicher Detektoreinheit. Hierzu wird das Faserbündel durch einen vorzugsweise zylindrischen Hohlkörper ersetzt, dessen Innenraum Platz für einen Freistrahl-Strahlengang zur Zuführung von Beleuchtungslicht in die Durchflusskammer und zur Ableitung von Detektionslicht aus der Durchflusskammer bietet. Da der so ausgestatte Sondenschaft nach wie vor, d.h. wie im Stand der Technik bekannt, eine im Montageendzustand die Wandung des das zu überwachende Medium enthaltenden Behälters durchsetzende Schnittstelle zwischen dem Behälterinneren und dem Behälteräußeren darstellt, muss mindestens sichergestellt sein, dass der Sondenschaft selbst mediendicht ist. Dies widerspricht zunächst dem Gedanken des Hohlkörpers. Daher ist es erfindungsgemäß vorgesehen, dass der Sondenschaft an seiner vorderen Stirnseite von einem transparenten Fenster abgeschlossen ist. Der Begriff "transparent" bedeutet im vorliegenden Zusammenhang, dass das Fenster eine für die vorgesehene Messung hinreichende Durchlässigkeit für Licht des jeweils benötigen Spektralbereichs aufweist. Für den Fall der NIR-Spektroskopie beispielsweise kann das Fenster aus Quarz oder Saphir gefertigt sein. Bei anderen Spektralbereichen und/oder anderen Detektionsmethoden wird der Fachmann eine geeignete Materialanpassung des Fensters vorzunehmen wissen.

Eine weitere Schwierigkeit, die sich aus der Freistrahlführung im Inneren des hohlen Sondenschaftes ergibt, ist, dass die Lichtein- und -auskopplung in den bzw. aus dem Sondenschaft stets gleich erfolgen muss. Dem begegnet die Erfindung dadurch, dass am rückwärtigen Ende des Sondenschaftes eine erste Koppeleinrichtung vorgesehen ist, welche eine starre Ankopplung des Sensormoduls erlaubt. Beispielsweise kann hier ein Gewinde oder eine Bajonettkopplung oder ähnliches vorgesehen sein, wobei selbstverständlich eine korrespondierende Koppeleinrichtung am Eingang des Sensormoduls vorzusehen ist. Unter einem Modul sei hier eine separate Baueinheit verstanden, die die genannten Elemente in fester räumlicher Konstellation zueinander aufweist. Dieser modulare Aufbau erlaubt auch den einfachen und schnellen Austausch von Sensormodulen an einer Sonde bzw. die wechselnde Ankopplung eines Sensormoduls an unterschiedliche Sonden desselben oder verschiedenen Behälter.

Bei einer bevorzugten Weiterbildung der Erfindung ist vorgesehen, dass der Sondenschaft zwischen seinem vorderen und seinem rückwärtigen Ende eine zweite, äußere Koppeleinrichtung zur die Behälterwandung des Behälters durchsetzenden, starren Ankopplung des Sensorschaftes an einen korrespondierenden Koppelflansch des Behälters aufweist. Typischerweise haben Tanks, wie sie in der pharmazeutischen oder biotechnischen Industrie verwendet werden, fest in die Behälterwandung integrierte Zugangsports. Bekannte Portstandards sind der Ingold-Port, der Broadly-James-Port, der B.-Braun-Sicherheitsport und andere. Diese weisen eine Öffnung definierter Form und Größe sowie einen die Öffnung umgebenden Flansch mit Koppelmitteln, wie beispielsweise Gewinden, Bajonett-Kopplungen, Klemmflanschen oder ähnliches auf. Form und Größe des erfindungsgemäßen Sondenschaftes sind günstigerweise so auf den jeweiligen Standard abgestimmt, dass eine passgenaue Einführung des Schaftes in die Öffnung möglich wird. Weiter weist der Schaft bevorzugt Koppelmittel auf, die mit den Koppelmitteln des jeweiligen Ports korrespondieren, sodass eine dichte und sichere Verbindung hergestellt werden kann.

Wie aus dem Stand der Technik grundsätzlich bekannt, ist die Höhe der Durchflusskammer günstigerweise einstellbar. Dies bedeutet, dass der optische Weg, den Beleuchtungs- bzw. Detektionslicht durch das zu vermessende Medium zurücklegen, eingestellt und damit an die jeweiligen optischen Verhältnisse des Mediums angepasst werden kann. Hierzu ist bevorzugt vorgesehen, dass die Reflexionsscheibe auf einer Verstellplatte festgelegt ist, deren Abstand zu dem transparenten Fenster mittels einer Feingewindekopplung einstellbar ist. Diese Ausgestaltung erlaubt eine an die jeweils vorgesehene Messung angepasste Wahl der Reflexionsscheibe, die fest oder reversibel mit der Verstellplatte verbunden sein kann. Der Begriff der Reflexionsscheibe ist im Kontext der vorliegenden Erfindung weit zu verstehen und umfasst nicht nur die rein strahlenoptische Reflexion nach Art eines Spiegels, sondern auch Streuungen. Insbesondere kann vorgesehen sein, dass die Reflexionsscheibe die Eigenschaften eines Lambertschen Streuers zeigt.

Bevorzugt setzt sich die Idee der Freistrahlzu- und -abführung von Licht in dem an die erfindungsgemäße Transflexionssonde anzukoppelnden Sensormodul fort. Dies bedeutet, dass das Licht auch im Sensormodul vollständig oder zumindest überwiegend als Freistrahl transportiert wird. Hierzu ist bevorzugt vorgesehen, dass die Beleuchtungs-Freistrahlleiteinrichtung einen paraboloiden Spiegel aufweist, in dessen Brennpunkt die Lichtquelle angeordnet ist. Hierdurch wird das Licht der Lichtquelle weitgehend kollimiert, sodass es ohne wesentliche Verluste die Länge des Sondenschaftes bis hin zur Durchflusskammer durchlaufen kann. Zudem hat die Spiegelkopplung auch ganz allgemein den Vorteil, dass Aberrationen, beispielsweise chromatische Aberrationen, wie sie durch linsenoptische Lichtleitmittel eingeführt werden können, nicht auftreten.

Bei einer bevorzugten Weiterbildung der vorliegenden Erfindung wird das Konzept der Freistrahlführung bei der Eingangsanordnung des optischen Detektors durchbrochen. Dieser kann ohne weiteres als Lichtleitfasereingang ausgebildet sein. Dies hängt stark von der Natur des Detektors ab. Die vorerwähnten Nachteile der Faserkopplung, die insbesondere die Sammlung des Detektionslichtes aus der Durchflusskammer betrafen, treten an dieser nachgelagerten Stelle des optischen Weges nicht mehr auf.

Unabhängig von der speziellen Natur der optischen Messung bedarf es häufig einer Referenzmessung, mit der die eigentliche Messung verglichen wird. Um eine solche Referenzmessung zu ermöglichen, ist bevorzugt vorgesehen, dass das Sensormodul eine verstellbare Reflektoreinheit umfasst, mit der in einer Referenz-Einstellung Licht der Lichtquelle zu der Eingangsanordnung des optischen Detektors führbar ist. Mit anderen Worten kann die verstellbare Reflektoreinheit, die beispielsweise klappbar ausgebildet sein kann, in einer ersten Einstellung Licht in der oben beschriebenen Weise in die Transflexionssonde und aus dieser heraus passieren lassen und in einer zweiten Einstellung das Licht der Lichtquelle direkt auf den Eingang des Detektors zurückstreuen oder spiegeln. Eine in der zweiten Stellung vorgenommene Messung liefert die Referenzwerte, während die in der ersten Stellung vorgenommene Messung die eigentlichen Messwerte liefert. Die Reflektoreinheit ist vorzugsweise als Lambertscher Streukörper ausgestaltet und liefert so das Intensitätsnormal für die Bestimmung der Absorbanz des Messgutes in der Transflexionssonde.

Weitere Merkmale und Vorteile der Erfindung ergeben sich aus der nachfolgenden speziellen Beschreibung sowie den Zeichnungen.

### Kurzbeschreibung der Zeichnungen

Es zeigt:

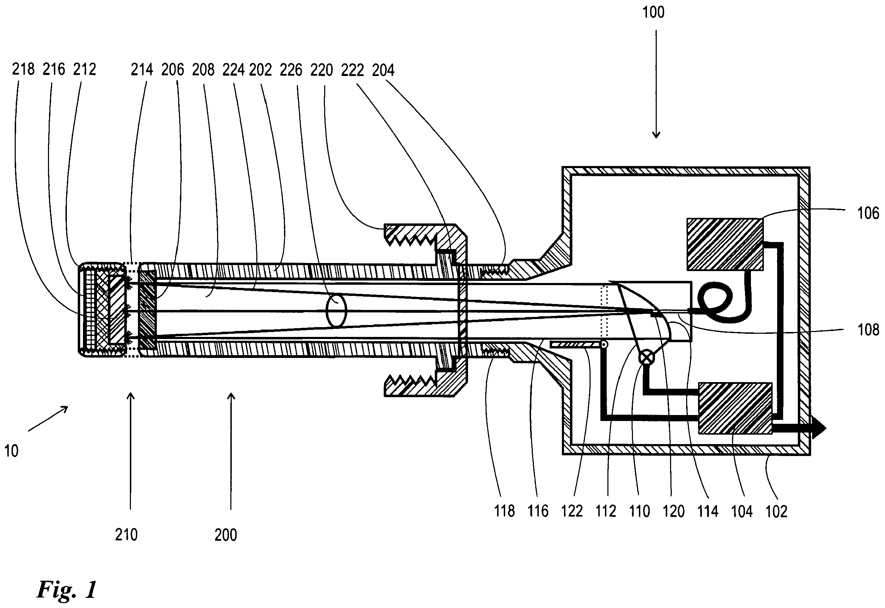

- Figur 1:: eine schematische Schnittdarstellung eines erfindungsgemäßen Transflexionssensors.

### Ausführliche Beschreibung bevorzugter Ausführungsformen

Figur 1 zeigt eine schematische Schnittdarstellung eines erfindungsgemäßen Transflexionssensors 10. Der Transflexionssensor 10 umfasst zwei Haupteinheiten, nämlich ein Sensormodul 100 sowie eine Transflexionssonde 200, die an ihrem rückwärtigen Ende starr mit dem Sensormodul 100 gekoppelt ist und an deren vorderen Ende sich eine Durchflusskammer 210 anschließt.

Das Sensormodul 100 der gezeigten Ausführungsform weist innerhalb eines Gehäuses 102 mehrere, nicht weiter im Detail dargestellte Einheiten auf. Es ist dies insbesondere eine Energieversorgungseinheit 104, die auch mit einer Steuereinheit kombiniert werden kann und die Schnittstelle zwischen dem Sensormodul 100 und weiteren Einheiten einer beliebig komplex ausgestalteten Anlage darstellt. Weiter ist rein schematisch ein optischer Detektor 106 dargestellt, der beispielsweise als Spektrometer, insbesondere als NIR-Spektrometer, jedoch auch auf andere Weise, beispielsweise als Fotodiode oder als sonstiger optischer Detektor ausgebildet sein kann. Bei der dargestellten Ausführungsform ist der optische Eingang 108 des optischen Detektors 106 als Fasereingang dargestellt. Bei alternativen Ausführungsformen kann auch ein Freistrahleingang realisiert sein.

In etwas größerem Detail dargestellt ist eine Lichtquelle 110, die beispielsweise als Wolfram-Halogen-Lampe oder als Leuchtdiode, insbesondere mit Emissionsspektrum im nutzbaren Wellenlängenbereich, z.B. dem NIR-Bereich, jedoch auch auf andere Weise, beispielsweise als Gasentladungslampe, Lasereinheit oder ähnliches ausgebildet sein kann. Das Licht 112 der Lichtquelle 110 wird mittels eines Paraboloidspiegels 114, in dessen Brennpunkt die Lichtquelle 110 angeordnet ist, kollimiert. Der kollimierte Strahl 116 wird auf eine Ausgangsöffnung des Gehäuses 102 gespiegelt.

Diese Ausgangsöffnung weist bei der dargestellten Ausführungsform ein Außengewinde 118 auf, auf welches die weiter unten näher zu erläuternde Transflexionssonde 200 aufgeschraubt ist. Selbstverständlich sind an dieser Stelle auch andere Koppelmechanismen, wie beispielsweise ein Bajonettverschluss, verschraubte Flansche, Verklemmungen, Verrastungen etc. denkbar.

Im Schnittpunkt der optischen Achse, die durch die Achse des kollimierten Strahls 116 definiert wird, mit der Kontur des paraboloiden Spiegels 114, weist dieser eine Durchgangsöffnung auf, an die sich der Fasereingang 108 des Detektors 106 anschließt. Auf der der Lichtquelle 110 zugewandten Seite dieser Öffnung ist ein schmaler Schirm 120 angeordnet, der einen direkten Einfall des Beleuchtungslichtes 112 in den Fasereingang 108 verhindert. Schließlich ist in dem Gehäuse 102 noch eine verstellbare, bevorzugt klappbare Reflektoreinheit 122 enthalten, die in ihrer mit durchgezogenen Linien dargestellten Stellung den Strahlengang nicht beeinflusst, die jedoch in ihrer punktiert dargestellten Stellung den Strahl 116 wenigstens teilweise auf den Fasereingang 108 zurückstreut.

Das Sensormodul 100 ist mit der Transflexionssonde 200 starr verbunden, in der gezeigten Ausführungsform insbesondere starr verschraubt. Die Starrheit der Kopplung resultiert aus der Starrheit der für die genannten Elemente gewählten Materialien, insbesondere Metall oder Hartkunststoff.

Die Transflexionssonde 200 umfasst einen Sondenschaft 202, der im Wesentlichen hohlzylindrische Form hat. An seinem rückwärtigen Ende weist der Sondenschaft 202 ein Innengewinde 204 auf, welches mit dem Außengewinde 118 des Sensormoduls 100 korrespondiert. An seinem gegenüberliegenden, vorderen Ende ist der Sondenschaft mittels eines optischen Fensters 206, das insbesondere aus Quarz oder Saphir besteht, abgeschlossen. Durch diesen Abschluss ist der hohle Innenraum 208 der Sonde 200 sowie der daran angekoppelte Innenraum des Sensormoduls 100 dicht gegen die Umgebung abgeschlossen. Dem optischen Fenster 206 vorgesetzt ist ein mit einem Innenfeingewinde versehener Verstellring 212, welcher von dem optischen Fenster 206 mittels punktiert dargestellter Stege 214 beabstandet gehalten ist. Zwischen den Stegen 214 sind Durchbrüche vorgesehen. In den Verstellring 212 eingeschraubt ist eine Verstellplatte 216, die auf ihrer dem optischen Fenster 206 zugewandten Seite eine Reflexionsscheibe 218, die insbesondere als Lambertscher Streuer ausgebildet ist, trägt. Der Raum zwischen der Reflexionsscheibe 218 und dem optischen Fenster 206 wirkt aufgrund der Stege 214 und der zwischen ihnen angeordneten Durchbrüche als eine Durchflusskammer 210. Bevorzugt sind das optische Fenster 206 und die Reflexionsscheibe 218 leicht schräg zueinander orientiert, d.h. sie stehen in einem kleinen Winkel von ca. 1 bis 3 Grad, vorzugsweise 2 Grad zueinander. So werden unerwünschte Grenzflächenreflexionen verhindert. Schließlich weist die Transflexionssonde nahe ihrem rückwärtigen Ende eine Überwurfmutter 220 auf, die gegen einen Ringvorsprung 222 vorzugsweise dichtend abgestützt ist und zur Kopplung des Sondenschaftes mit einem korrespondierenden Koppelflansch eines nicht dargestellten Behälters verschraubbar ist.

Zur Durchführung einer Messung mit dem dargestellten Sensor wird, wie oben beschrieben, Licht 112 der Lichtquelle 110 mittels des Spiegels 114 kollimiert und durch die Ausgangsöffnung des Sensormoduls 100 in den Innenraum 208 des Sondenschaftes 202 eingespiegelt. Die optische Achse und die Achse des Sondenschaftes 202 fallen dabei im Wesentlichen aufeinander. Auf diese Weise kann das Licht 112 der Lichtquelle 110 weitestgehend verlustfrei zu dem optischen Fenster 206 geleitet werden, welches von ihm durchstrahlt wird. Auch die sich an das optische Fenster 206 anschließende Durchflusskammer 210 wird durchstrahlt. Diese Durchflusskammer 210 wird von dem Medium im Inneren des nicht dargestellten Behälters durchströmt, sodass dieses Medium von dem Beleuchtungslicht 116 ebenfalls durchstrahlt wird. Auf der gegenüberliegenden Seite wird es an der Reflexionsscheibe 218 reflektiert bzw. gestreut, durchläuft die Durchflusskammer 210 erneut, durchstrahlt als Detektionslicht 224 erneut das optische Fenster 206, wird im Raumwinkel 226 zu der numerischen Apertur des faseroptischen Eingangs 108 des Detektors 106 aufgenommen und zur weiteren Messung an den Detektor 106 geleitet.

Natürlich stellen die in der speziellen Beschreibung diskutierten und in den Figuren gezeigten Ausführungsformen nur illustrative Ausführungsbeispiele der vorliegenden Erfindung dar. Dem Fachmann ist im Lichte der hiesigen Offenbarung ein breites Spektrum von Variationsmöglichkeiten an die Hand gegeben. Insbesondere sind die Dimensionen, insbesondere die Länge des Sonnenschaftes 202, dem jeweiligen Einzelfall und der jeweiligen Behältergröße anzupassen. Das zu vermessende Medium, das in der Regel flüssig sein wird, jedoch auch gasförmig sein kann, muss lediglich die Möglichkeit haben, die Durchflusskammer 210 zwischen dem optischen Fenster 206 und der Reflexionsscheibe 218 durchströmen zu können. Eine intensive Durchströmung ist vorteilhaft im Hinblick auf die Repräsentativität der Messung für das gesamte Behälterinnere. Auch die spezielle Dimensionierung der Kopplung des erfindungsgemäßen Sensors mit einem Koppelflansch des Behälters ist dem Fachmann in Ansehung des Einzelfalls überlassen.

### Bezugszeichenliste

- 10: Transflexionssensor
- 100: Sensormodul
- 102: Gehäuse
- 104: Energieversorgungseinheit
- 106: optischer Detektor
- 108: Fasereingang von 106
- 110: Lichtquelle
- 112: Licht von 110
- 114: Paraboloid-Spiegel
- 116: kollimierter Beleuchtungsstrahl
- 118: Koppelgewinde
- 120: Schirm
- 122: verstellbare Reflektoreinheit
- 200: Transflexionssonde
- 202: Sondenschaft
- 204: Koppelgewinde
- 206: optisches Fenster
- 208: Innenraum von 202
- 210: Durchflusskammer
- 212: Verstellring
- 214: Steg
- 216: Verstellplatte
- 218: Reflexionsscheibe
- 220: Überwurfmutter
- 222: Ringvorsprung
- 224: Detektionslicht
- 226: Raumwinkel des eingekoppelten Detektionslichtes

## Patentansprüche

1. Transflexionssonde zur Durchführung einer Transflexionsmessung an einem in einem starren Behälter befindlichen Fluid, umfassend einen mit einer Lichtleitstrecke in seinem Inneren ausgestatteten Sondenschaft (202), der als ein an seiner vorderen Stirnseite von einem transparenten Fenster (206) abgeschlossener, starrer Hohlkörper ausgebildet und an dessen vorderer Stirnseite eine offene Durchflusskammer (210) mit einer der vorderen Stirnseite des Sondenschaftes (202) gegenüberliegenden Reflexionsscheibe (218) angeordnet ist,
**dadurch gekennzeichnet,**
**dass** der Sondenschaft (202), dessen Innenraum Platz für einen darin vorgesehenen, sich über die gesamte Länge des Sondenschaftes (202) erstreckenden Freistrahl-Strahlengang zur Zuführung von Beleuchtungslicht in die Durchflusskammer (210) und zur Ableitung von Detektionslicht aus der Durchflusskammer (210) bietet, an seinem rückwärtigen Ende eine erste Koppeleinrichtung (204) zur starren Ankopplung eines Sensormoduls (100) an den Sondenschaft (202) aufweist.

2. Transflexionssonde nach Anspruch 1,
**dadurch gekennzeichnet,**
**dass** der Sondenschaft (202) zwischen seinem vorderen und seinem rückwärtigen Ende eine zweite, äußere Koppeleinrichtung (220, 222) zur die Behälterwandung des starren Behälters durchsetzenden, starren Ankopplung des Sensorschaftes (202) an einen korrespondierenden Koppelflansch des starren Behälters aufweist.

3. Transflexionssonde nach Anspruch 2,
**dadurch gekennzeichnet,**
**dass** die zweite Koppeleinrichtung (220, 222) korrespondierend zu einem Koppelflansch nach dem Ingold-, Broadly-James- oder B.-Braun-Sicherheits-Portstandard ausgelegt ist.

4. Transflexionssonde nach einem der vorangehenden Ansprüche,
**dadurch gekennzeichnet,**
**dass** die Reflexionsscheibe (218) auf einer Verstellplatte (216) festgelegt ist, deren Abstand zu dem transparenten Fenster (206) mittels einer Feingewindekopplung einstellbar ist.

5. Transflexionssensor, umfassend eine Transflexionssonde (200) nach einem der vorangehenden Ansprüche sowie ein starr an das rückwärtige Ende des Sensorschaftes (202) angekoppeltes Sensormodul (100), welches umfasst:
- eine Lichtquelle (110),
- eine Eingangsanordnung (108) eines optischen Detektors (106),
- eine Beleuchtungslicht-Freistrahlleiteinrichtung (114), die eingerichtet ist, Licht (112, 116) der Lichtquelle (110) entlang der Längserstreckung des Sensorschaftes zu dem transparenten Fenster (206) zu lenken, und
- eine Detektionslicht-Freistrahlleiteinrichtung, die eingerichtet ist, von der Reflexionsscheibe (218) durch das transparente Fenster (206) reflektiertes Licht (224) der Eingangsanordnung (108) des optischen Detektors (106) zuzuleiten.

6. Transflexionssensor nach Anspruch 5,
**dadurch gekennzeichnet,**
**dass** die Beleuchtungslicht-Freistrahlleiteinrichtung einen paraboloiden Spiegel (114) umfasst, in dessen Brennpunkt die Lichtquelle (110) angeordnet ist.

7. Transflexionssensor nach einem der Ansprüche 5 bis 6,
**dadurch gekennzeichnet,**
**dass** die Eingangsanordnung (108) des optischen Detektors (106) als ein Lichtleitfasereingang ausgestaltet ist.

8. Transflexionssensor nach einem der Ansprüche 5 bis 7,
**dadurch gekennzeichnet,**
**dass** das Sensormodul (100) eine verstellbare Reflektoreinheit (122) umfasst, mit der in einer Referenz-Einstellung Licht (112) der Lichtquelle (110) zu der Eingangsanordnung (108) des optischen Detektors (106) führbar ist.

## Claims

1. A transflexion probe for carrying out a transflexion measurement on a liquid located in a rigid vessel, comprising: a probe shaft (202) equipped with a light guide path in its interior, which defines a rigid cavity sealed on its front end face by a transparent window (206) and an open flow chamber (210) on its front end face with a reflective plate (218) arranged opposite the front end face of the probe shaft (202),
**characterized in that**
the probe shaft (202), whose interior offers space for a free beam beam path illuminating free beam extending over the entire length of the probe shaft (202) for feeding illuminating light into the flow chamber (210) and for removing detecting light out of the flow chamber (210) has a first coupling device (204) at the rear end for rigid coupling of a sensor module (100) to the probe shaft (202).

2. The transflexion probe according to claim 1, **characterized in that** the probe shaft (202) has a second, outer coupling device (220, 222) between its front end and its rear end for the rigid coupling, penetrating the vessel wall of the rigid vessel, of the sensor shaft (202) to a corresponding coupling flange of the rigid container.

3. The transflexion probe according to claim 2, **characterized in that** the second coupling device (220, 222) is designed to correspond to a coupling flange in accordance with an Ingold, Broadly-James or B. Braun safety port standard.

4. The transflexion probe according to any of the preceding claims, **characterized in that** the reflective plate (218) is fixed on an adjusting plate (216) whose distance from the transparent window (206) can be set by a fine thread coupling.

5. A transflective sensor, comprising a transflexion probe (200) according to any of the preceding claims as well as a sensor module (100) rigidly coupled to the rear end of the sensor shaft (202), comprising:
- a light source (110),
- an input arrangement (108) of an optical detector (106),
- an illuminating light free beam guiding device (114) set up to direct light (112, 116) of the light source (110) along the longitudinal extent of the sensor shaft to the transparent window (206), and
- a detecting light free beam guiding device set up to guide light (224) reflected by the reflective plate (218) through the transparent window (206) to the input arrangement (108) of the optical detector (106).

6. The transflective sensor according to claim 5, **characterized in that** the illuminating light free beam guiding device comprises a parabolic mirror (114) in whose focal point the light source (110) is arranged.

7. The transflective sensor according to any of claims 5 to 6, **characterized in that** the input arrangement (108) of the optical detector (106) is configured as an optical fiber input.

8. The transflective sensor according to any of claims 5 to 7, **characterized in that** the sensor module (100) comprises an adjustable reflector unit (122), with the aid of which it is possible in a reference setting to guide light (112) of the light source (110) to the input arrangement (108) of the optical detector (106).

## Revendications

1. Sonde en transflexion pour la mise en œuvre d'une mesure en transflexion sur un fluide se trouvant dans un récipient rigide, comprenant une tige de sonde (202), équipée dans son intérieur d'un trajet de guidage de lumière, qui est réalisée sous la forme d'un corps creux rigide fermé sur sa face frontale avant par une fenêtre (206) transparente et une chambre d'écoulement (210) ouverte avec un disque réfléchissant (218) opposé à la face frontale avant de la tige de sonde (202) est disposé sur sa face frontale avant,
**caractérisée en ce**
**que** la tige de sonde (202), dont l'espace intérieur offre de la place à une trajectoire de faisceau libre prévue dedans, s'étendant sur toute la longueur de la tige de sonde (202), destinée à amener une lumière d'éclairage dans la chambre d'écoulement (210) et à dévier la lumière de détection de la chambre d'écoulement (210), présente à son extrémité arrière un premier dispositif d'accouplement (204) pour l'accouplement rigide d'un module de capteur (100) à la tige de sonde (202).

2. Sonde en transflexion selon la revendication 1,
**caractérisée en ce**
**que** la tige de sonde (202) présente entre son extrémité avant et son extrémité arrière un deuxième dispositif d'accouplement (220, 222) extérieur pour l'accouplement rigide, traversant la paroi de récipient du récipient rigide, de la tige de capteur (202) à un flanc d'accouplement correspondant du récipient rigide.

3. Sonde en transflexion selon la revendication 2, **caractérisée en ce**
**que** le deuxième dispositif d'accouplement (220, 222) est conçu de manière correspondante à une bride d'accouplement selon la norme de port Ingold, Broadly-James ou port de sécurité B.-Braun.

4. Sonde en transflexion selon l'une quelconque des revendications précédentes,
**caractérisée en ce**
**que** le disque réfléchissant (218) est fixé sur une plaque mobile (216), dont la distance par rapport à la fenêtre (206) transparente peut être réglée au moyen d'un accouplement à filetage fin.

5. Capteur en transflexion, comprenant une sonde en transflexion (200) selon l'une quelconque des revendications précédentes ainsi qu'un module de capteur (100), accouplé rigidement à l'extrémité arrière de la tige de capteur (202), lequel comprend :
- une source de lumière (110),
- un ensemble d'entrée (108) d'un détecteur optique (106),
- un dispositif de guidage de faisceau libre de lumière d'éclairage (114), qui est conçu pour diriger la lumière (112, 116) de la source de lumière (110) le long de l'étendue longitudinale de la tige de capteur vers la fenêtre transparente (206), et
- un dispositif de guidage de faisceau libre de lumière de détection, qui est conçu pour amener la lumière (224) réfléchie par le disque réfléchissant (218) à travers la fenêtre transparente (206) à l'ensemble d'entrée (108) du détecteur optique (106).

6. Capteur en transflexion selon la revendication 5, **caractérisé en ce**
**que** le dispositif de guidage de faisceau libre de lumière d'éclairage comprend un miroir paraboloïde (114), dans le foyer duquel est disposée la source de lumière (110).

7. Capteur en transflexion selon l'une quelconque des revendications 5 à 6,
**caractérisé en ce**
**que** l'ensemble d'entrée (108) du détecteur optique (106) est réalisé sous la forme d'une entrée de fibre optique.

8. Capteur en transflexion selon l'une quelconque des revendications 5 à 7,
**caractérisé en ce**
**que** le module de capteur (100) comprend une unité réflectrice (122) mobile, avec laquelle, dans un réglage de référence, la lumière (112) de la source de lumière (110) peut être guidée vers l'ensemble d'entrée (108) du détecteur optique (106).
